# EUROPÄISCHE PATENTANMELDUNG

(11) **EP 3 444 167 A1**
(43) Veröffentlichungstag der Anmeldung: **20.02.2019**
(21) Anmeldenummer: 18182435.0
(22) Anmeldetag: 09.07.2018
(51) Int. Cl.: B62D 6/00

(54) **LENKWINKELREGLER**

(30) Priorität: 18.08.2017 DE 102017214380
(71) Anmelder: VOLKSWAGEN AKTIENGESELLSCHAFT, 38440 Wolfsburg (DE)
(72) Erfinder: Dreyer, Dirk, 31655 Stadthagen (DE)

(57) **Zusammenfassung**

Die Erfindung betrifft einen Lenkwinkelregler (1), wobei der Lenkwinkelregler (1) derart ausgebildet ist, einen Ist-Wert (ϕ_{IST}) auf einen Soll-Wert (ϕ_{SOLL}) zu regeln, wobei der Lenkwinkelregler (1) als Ausgangssignal ein Stellsignal (S) für eine Leistungselektronik (6) ausgibt, um einen elektrischen Servo-Motor (7) anzusteuern, wobei der Ist-Wert (ϕ_{IST}) ein Lenkwinkel oder eine zu dem Lenkwinkel korrespondierende Messgröße ist und der Soll-Wert (ϕ_{SOLL}) eine Lenkwinkelanforderung oder Messgrößenanforderung ist, wobei dem Lenkwinkelregler (1) mindestens ein Speicher (3) zugeordnet ist, in dem mindestens zwei verschiedene Regelalgorithmen (R1-R3) abgelegt sind.

## Beschreibung

Die Erfindung betrifft einen Lenkwinkelregler.

Bekannte Lenkungssysteme mit einem elektrischen Servo-Motor erfassen beispielsweise ein Handmoment oder einen Lenkraddrehwinkel, wobei dann in Abhängigkeit des erfassten Handmoments oder Lenkraddrehwinkels ein Unterstützungsmoment berechnet wird, das durch den Servo-Motor aufgebracht werden soll.

Bei modernen Kraftfahrzeugen, wo ein Fahrerassistenz-System eine Lenkaufgabe vollständig oder nahezu vollständig übernimmt, gibt das Fahrerassistenz-System die Trajektorie vor, die dann von dem Lenkwinkelregler umgesetzt wird. Als Eingangsgröße erhält dann der Lenkwinkelregler einen Soll-Lenkwinkel oder eine korrespondierende Größe und führt den Ist-Lenkwinkel bestmöglich nach, um die Regeldifferenz zu minimieren.

Aus der DE 10 2014 219 936 A1 ist ein Trajektorien-Planungsverfahren zur Ermittlung eines Steuerprofils für ein Kraftfahrzeug, insbesondere ein autonom fahrendes Kraftfahrzeug, bekannt, das die folgenden Verfahrensschritte aufweist:
- Bereitstellen eines ersten Positionssets und eines zweiten Positionssets, wobei das erste Positionsset mindestens eine Information bezüglich einer Anfangsbedingung an einen Trajektorienanfang aufweist und das zweite Positionsset mindestens eine Information bezüglich einer Endbedingung an einem Trajektorienende aufweist;
- Bereitstellen eines ersten und zweiten Steuerungssets, wobei das erste Steuerungsset mindestens eine Information bezüglich eines ersten Steuerungszustandes des Kraftfahrzeugs am Trajektorienanfang aufweist und das zweite Steuerungsset mindestens eine Information bezüglich eines zweiten Steuerungszustandes des Kraftfahrzeugs am Trajektorienende aufweist;
- Bereitstellen einer Fahrzeugbewegungsmodellierungsfunktion, welche ein kinematisches Bewegungsmodell des Kraftfahrzeugs aufweist;
- Bereitstellen eines Solvers;
- Bereitstellen eines Steuerprofilinformationssets, welches zwei Profilinformationswerte aufweist, die indikativ für die Trajektorie sind, mittels Anwenden des Solvers auf die Fahrzeugbewegungsmodellierungsfunktion in Abhängigkeit des ersten und zweiten Positionssets und des ersten und zweiten Steuerungssets und
- Bestimmen eines Steuerprofils für das Kraftfahrzeug in Abhängigkeit des Steuerprofilinformationssets.

Dabei wird versucht, dass die abzufahrende Trajektorie weitgehend einem natürlichen Fahrverhalten entspricht.

Der Erfindung liegt das technische Problem zugrunde, einen Lenkwinkelregler zu schaffen, der ein verbessertes Fahrgefühl vermittelt.

Die Lösung des technischen Problems ergibt sich durch einen Lenkwinkelregler mit den Merkmalen des Anspruchs 1. Weitere vorteilhafte Ausgestaltungen der Erfindung ergeben sich aus den Unteransprüchen.

Der Lenkwinkelregler ist derart ausgebildet, einen Ist-Wert auf einen Soll-Wert zu regeln, wobei der Lenkwinkelregler als Ausgangssignal ein Stellsignal für eine Leistungselektronik ausgibt, um einen elektrischen Servo-Motor anzusteuern, wobei der Ist-Wert ein Lenkwinkel oder eine zu dem Lenkwinkel korrespondierende Messgröße ist und der Soll-Wert eine Lenkwinkelanforderung oder Messgrößenanordnung ist, wobei dem Lenkwinkelregler ein Speicher zugeordnet ist, in dem mindestens zwei verschiedene Regelalgorithmen abgelegt sind. Hierdurch kann das Fahrgefühl entsprechend angepasst werden. Über den Regelalgorithmus kann beispielsweise eingestellt werden, wie schnell und/oder ob mit oder ohne Überschwingen der Soll-Wert eingestellt wird.

In einer Ausführungsform ist der Lenkwinkelregler derart ausgebildet, dass ein Regelalgorithmus manuell auswählbar ist. So kann sich der Fahrer individuell das Fahrverhalten seines autonomen oder assistierend fahrenden Fahrzeugs einstellen.

In einer weiteren Ausführungsform ist der Lenkwinkelregler derart ausgebildet, dass ein Regelalgorithmus in Abhängigkeit mindestens einer Fahrzustandsgröße ausgewählt wird. Eine derartige Fahrzustandsgröße kann beispielsweise die Geschwindigkeit, Beschleunigung, aber auch die Beladung des Fahrzeugs sein. Des Weiteren kann beispielsweise der Regelalgorithmus in Abhängigkeit einer Fahrsituation ausgewählt werden, beispielsweise um situativ sehr schnell die Trajektorie anzupassen.

In einer weiteren Ausführungsform spiegelt mindestens ein Regelalgorithmus ein sportliches Fahrverhalten und mindestens ein Regelalgorithmus ein komfortables Fahrverhalten wider. So kann beispielsweise über den Regelalgorithmus ein Gierverhalten des Fahrzeugs beeinflusst werden, sodass ein sportliches oder komfortables Fahrgefühl entsteht.

In einer weiteren Ausführungsform ist die korrespondierende Messgröße eine Zahnstangenposition.

In einer weiteren Ausführungsform ist der Lenkwinkelregler Bestandteil eines automatisiert fahrenden Fahrzeugs.

Die Erfindung wird nachfolgend anhand eines bevorzugten Ausführungsbeispiels näher erläutert. Die einzige Figur zeigt ein schematisches Blockschaltbild eines Lenkwinkelreglers.

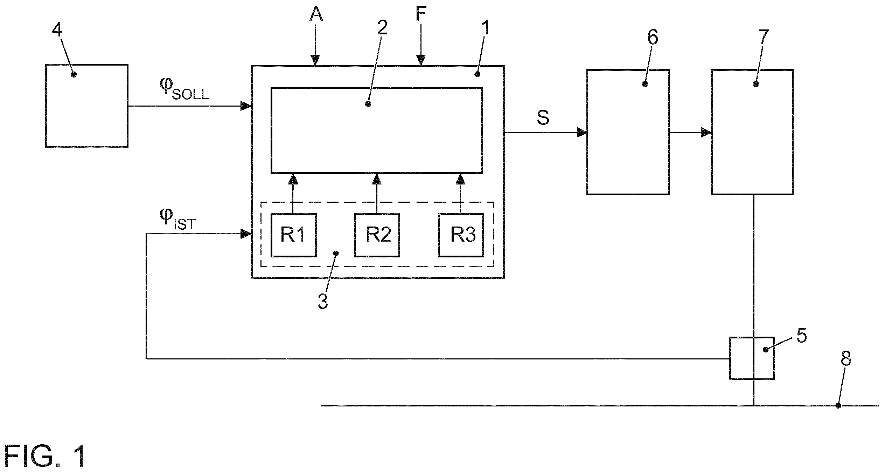

In der Fig. 1 ist ein Lenkwinkelregler 1 dargestellt, der eine Recheneinheit 2 und eine Speichereinheit 3 aufweist, wobei in der Speichereinheit 3 verschiedene Regelalgorithmen R1-R3 abgelegt sind. Der Lenkwinkelregler 1 erhält dabei von einem Fahrerassistenz-System 4 einen Soll-Lenkwinkel ϕ_{SOLL} und von einem Sensor 5 einen Ist-Lenkwinkel ϕ_{IST}. Das Fahrerassistenz-System 4 ist beispielsweise ein Trajektorien-Planungs-System eines autonom fahrenden Fahrzeugs und übermittelt die Trajektorie in Form von Soll-Lenkwinkeln ϕ_{SOLL} an den Lenkwinkelregler 1. Die Recheneinheit 2 erzeugt dann mittels eines Regelalgorithmus R1-R3 ein Stellsignal S für eine Leistungselektronik 6, die dann einen Elektromotor 7 ansteuert, um die Regeldifferenz ϕ_{SOLL}-ϕ_{IST} zu minimieren, indem der Elektromotor 7 eine Zahnstange 8 verschiebt. Der Lenkwinkelregler 1 ist weiter derart ausgebildet, ein Auswahlsignal A zu empfangen und in Abhängigkeit des Auswahlsignals A einen der Regelalgorithmen R1-R3 auszuwählen. Des Weiteren ist der Lenkwinkelregler 1 derart ausgebildet, ein Fahrzustandssignal F zu empfangen und in Abhängigkeit des Fahrzustandssignals F einen Regelalgorithmus R1-R3 auszuwählen.

Über das Auswahlsignal A kann sich dann der Nutzer ein gewünschtes Fahrverhalten einstellen bzw. über das Fahrzustandssignal F kann situativ auf einen geeigneten Regelalgorithmus R1-R3 umgeschaltet werden.

## Patentansprüche

1. Lenkwinkelregler (1), wobei der Lenkwinkelregler (1) derart ausgebildet ist, einen Ist-Wert (ϕ_{IST}) auf einen Soll-Wert (ϕ_{SOLL}) zu regeln, wobei der Lenkwinkelregler (1) als Ausgangssignal ein Stellsignal (S) für eine Leistungselektronik (6) ausgibt, um einen elektrischen Servo-Motor (7) anzusteuern, wobei der Ist-Wert (ϕ_{IST}) ein Lenkwinkel oder eine zu dem Lenkwinkel korrespondierende Messgröße ist und der Soll-Wert (ϕ_{SOLL}) eine Lenkwinkelanforderung oder Messgrößenanforderung ist, wobei dem Lenkwinkelregler (1) mindestens ein Speicher (3) zugeordnet ist, in dem mindestens zwei verschiedene Regelalgorithmen (R1-R3) abgelegt sind.

2. Lenkwinkelregler nach Anspruch 1, **dadurch gekennzeichnet, dass** der Lenkwinkelregler (1) derart ausgebildet ist, dass ein Regelalgorithmus (R1-R3) manuell auswählbar ist.

3. Lenkwinkelregler nach Anspruch 1 oder 2, **dadurch gekennzeichnet, dass** der Lenkwinkelregler (1) derart ausgebildet ist, dass ein Regelalgorithmus (R1-R3) in Abhängigkeit mindestens einer Fahrzustandsgröße ausgewählt wird.

4. Lenkwinkelregler nach einem der vorangegangenen Ansprüche, **dadurch gekennzeichnet, dass** mindestens ein Regelalgorithmus (R1-R3) ein sportliches Fahrverhalten und mindestens ein Regelalgorithmus (R1-R3) ein komfortables Fahrverhalten widerspiegelt.

5. Lenkwinkelregler nach einem der vorangegangenen Ansprüche, **dadurch gekennzeichnet, dass** die korrespondierende Messgröße eine Zahnstangenposition ist.

6. Lenkwinkelregler nach einem der vorangegangenen Ansprüche, **dadurch gekennzeichnet, dass** der Lenkwinkelregler (1) Bestandteil eines automatisiert fahrenden Fahrzeugs ist.
